# EUROPEAN PATENT APPLICATION

(11) **EP 0 697 269 A2**
(43) Date of publication of application: **21.02.1996**
(21) Application number: 95830329.9
(22) Date of filing: 27.07.1995
(51) Int. Cl.: B25G 3/10, B25G 3/38

(54) **A pad for realization of tools, such as floor sponges, brushes, dusters and the like, for cleaning and otherwise treating surfaces**

(30) Priority: 03.08.1994 IT BO940380; 10.02.1995 IT BO950045
(71) Applicant: MELICONI S.p.A., I-40057 Cadriano di Granarolo Emilia, Bologna (IT)
(72) Inventor: Meliconi, Loris, I-40122 Bologna (IT)
(74) Representative: Pederzini, Paolo

(57) **Abstract**

The invention relates to a pad (1) for making tools and/or instruments for cleaning and treating surfaces in general, which is of a type provided with an attachment (2) for a handle (3), wherein a connection of the pad (1) to the handle (3) is constituted by an elastic hinge (4) which is coaxial to the attachment (2) and is interpositioned between the pad (1) and the handle (3), constituting a torsional and axial constraint therebetween and leaving the handle (3) free to move into any inclined position with respect to the pad (1), while leaving the constraint unaltered; in use, for any inclination of the handle (3) and for any rotation thereof about its longitudinal axis and for any axial thrust imparted thereon, the elastic hinge (4) is able to transmit to the pad (1) torsional forces and thrusts able to cause the pad (1) to move forwards and backwards while remaining completely in contact with a surface to be treated (28) on which it rests and operates.

## Description

The invention relates to the sector of instruments or equipment used to carry out cleaning operations, or surface treatments, on floors and walls in general. It concerns a pad, of the type ovided with an attachment for fixing to a gripping handle and destined, for example, to realize a support element applicable to a series of exchange parts in textile or like material suitable for cleaning or otherwise treating surfaces. These change parts constitute the work heads for cleaning and treating said surfaces, and are predisposed to be easily attachable to the pad itself and thus easily substitutable for realizing, obviously together with the pad, sponge mops for cleaning floors, brushes, dusters and like tools.

The main aim of the present invention is to provide a pad, of the above-indicated type, which can be moved over the surface to be cleaned without ever losing contact therewith, and which can be rotated thereon, again without losing contact, by rotating the handle about its own axis at any angular position of the handle with respect to the pad.

Reference is made in particular to tools equipped with a pad couplable to substitutable textile or like material applications, said application or tool being equipped with pockets into which the ends of a pad are stably inserted, the pad being provided with an attachment to the handle; the pad attachment being hinged so that the handle han be moved on a substantially perpendicular plane to the axis of the hinge and can be inclined with respect to the pad so that the latter can be moved even when the handle is more or less parallel to it and can thus be practical and efficiently utilizable in small and awkward spaces, such as for example beneath or between items of furniture. A detailed examination of known-type and more evolved models of tools such as the one described above reveals that the pads are connected to the handle by means of a more complex mechanical hinging system, which not only permits the above-mentioned inclination of the handle on a single plane as in the case of the single hinge, but also allows the handle to be moved in space and to be positioned oblique to the pad, which stays in the same position. At the same time, this type of mechanically hinged system allows the handle, arranged oblique to the pad and set in rotation about its own longitudinal axis, to transmit its rotating motion to the pad.

These types of mechanically hinged systems are constituted by mechanically-interconnected rotating couples, which realize rigid hinged and spatial systems which, where the hinges axis of the rotating couples are concurrent and perpendicular to each other, meet in a universal joint.

These spatially hinged systems are comprised in various inventions, in particular in US patent 366,790, where the connection between the handle and the pad is realized by means of a spherical mechanical couple constituted by a sphere solidly fixed on an end of the handle and a seating therefor afforded in the pad. The handle is thus free to rotate about any axis with respect to the pad, but at the same time a rotation thereof about its own longitudinal axis does not lead to any movement of note, even though inside the seat a high-friction element is provided to stabilize the couple between the sphere and the seat.

French patent FR 2,229,511 has a handle connected to the pad by a hinge consisting of two rotating couples with perpendicular but not concurrent axes. The hinge can oscillate with respect to the pad about an axis which is parallel to the longituduinal axis of the pad, while the handle can oscillate with respect to the hinge about an axis which is transversal thereto. The oscillations are free and limited by end-run stops.

Summarizing, the solution proposed in US 366,790 offers numerous degrees of liberty thanks to the use of the ball joint, but does not allow transmission of rotation of the handle to the pad, while FR 2,279,511 exhibits a substantial limitation as far as the abovementioned rotating transmission is concerned. It is not possible directly to transmit a rotation from the handle, arranged in a decidedly inclined position, to the pad, since the two axes of the rotating couple are not concurrent, as happens in the case of universal joints.

In any case, even should the two axes be concurrent, there would still be a mechanical limit inasmuch as the universal joint operates correctly only when the angle formed by the members of the hinge system is fairly small.

With this type of dual-rotating couple hinge system it is possible, though with some difficulty, to rotate the pad on its lie plane following a rotation of the handle about its longitudinal axis only when, at the same time, the pad is made to slide forwards and backwards up until it reaches the desired inclination. When these alternative back-and-forth movements are performed contemporaneously to a rotation of the handle, the pad is rotated without detaching from its lie plane and tilting, which otherwise could only be obtained with rotation of the handle. In other words the rotation of the handle tends to cause detachment of the pad from the surface being cleaned, reducing the contact surface between the pad and the surface, while the back-and-forth movement causes a rotation of the pad about said contact surface, thus limiting tilt.

From the above description it is evident that the pads all exhibit handle-pad hinges which are of a rigid mechanical type and which do not allow transmission of a rotation of the handle to the pad at any handle-pad inclination reached during use. These hinges are also structurally complex and kinematically limited for the use they are designed for.

The aim of the present invention is to provide a pad equipped with a hinge able to obviate the mechanical/kinetic limitations inherent in hinge systems of the type described hereinabove, and able correctly and effectively to transmit a rotation to the pad following a rotation imposed on the handle.

The technical characteristics of the invention, according to the aims set out above, are clearly disclosed in the claims which accompany the present description, and the advantages of the invention will better emerge from the detailed description that follows, made with reference to the accompanying figures of the drawings, which represent a non-limiting preferred embodiment offered here purely by way of example, in which:
figures 1 and 2 are perspective views of the pad according to the present invention associated to a handle and in different work configurations;
figure 3 is a perspective view of the pad of figures 1 and 2 during coupling with a respective workhead cleaning tool;
figures from 4 to 16 illustrate either in lateral view or in axial section some further embodiments of the pad of figures from 1 to 3;
figure 17 is a lateral view, with some parts sectioned, of the pad of figure 16 during its coupling with a workhead cleaning tool;
figure 18 is a perspective view of the pad realized according to a preferred embodiment, with some parts sectioned and others indicated with a broken line in order better to evidence the pad's internal structure;
figure 19 is a lateral view of the pad of figure 18 during its coupling with a workhead cleaning tool;
figures 20 and 21 illustrate two further embodiments of the pad according to the invention with some parts removed better to evidence others and especially to evidence the operative configuration illustrated in figure 21.

With reference to the drawings, the pad according to the present ivnention is indicated in its entirety by 1 and is provided with an attachment 2 for fixing to a handle 3.

The connection between the pad 1 and the handle 3 is constituted by an elastic hinge 4 which is coaxial to the attachment 2 and interpositioned between the pad 1 and the attachment 2 itself.

An elastic hinge 4 constitutes a torsional and axial constraint between the pad 1 and the handle 3, and leaves the handle 3 free to reach any inclined position whatsoever with respect to the pad 1, without altering said torsional and axial constraint. In other words, the elastic hinge 4 is able to transmit a rotation to the pad 1 on the lie plane thereof following a rotation of the handle 3 about its own longitudinal axis and independently of the inclination of the handle 3 with respect to the pad 1 during normal use. In other words, as will more clearly emerge from the following, for every spatially assumed angular position of the handle 3 with respect to the pad 1, a rotation of the pad 1 corresponds directly to a rotation of the handle about its axis, the pad 1 rotating exclusively on its lie plane without even minimally losing contact with the surface to be cleaned.

In a first embodiment, illustrated in detail in figures 1, 2 and 3, the pad 1 is realized in flexible or flimsy material having characteristics such that the pad 1 can assume arced or waved configurations in space, such as to better adapt to surfaces which are not perfectly flat, for example some kinds of floors. A further motive for realizing the pad 1 in flexible or flimsy material is in order better to couple it with a cleaning bead 8 such as that illustrated in figure 3, in which it can be noted that the raised pad 1 assumes an arced conformation with downwards-facing concavity. This means that it reduces its longitudinal dimension and its opposite ends can be easily inserted, following the direction of arrows C in figure 3, during the lowering of the pad 1 according to arrow A of the same figure, into respective pockets 7 afforded in the the opposite ends of the cleaning tool head 8. Tool heads of this type, made in textile or other materials which are suitable for the task of cleaning or polishing surfaces and provided with pockets 7, are well known, as are some types of pad which will be considered hereinbelow. These exchangeable heads present some drawbacks concerning their coupling to pads of known type, which are rigid and therefore undeformable. Recently a rigid pad made in two parts has been made available on the market, which parts are more or less consecutive and are partially superimposed on one another and hinged to each other about a transversal axis thereof such that their mass can be reduced at least during the coupling phase to the exchange tool head. This pad is, however, quite complicated from the constructional point of view and delicate during operation since it requires organs for reciprocal blocking of the two half-elements during normal use. Further, it is provided with a hinge which is technically equivalent to that of patent FR 2,229,511, even if the axes of the two rotating couples have been exchanged, in the sense that the hinge oscillates with respect to the pad about a transversal axis of the pad and the handle oscillates with respect to the hinge about an axis which is parallel to the longitudinal axis of the pad.

Returning to the pad 1 of the present invention, the elastic hinge 4 is constituted by an elastic element 5 which exhibits a flexible structure while being substantially rigid to torsion and axial stress, in the sense that subjected to one of the aforegoing forces it efficiently transmits same. The elastic element 5 functions as a hinge element or fulcrum or sphere thanks to its elastic deformability. In more detail, the elastic hinge 4 carries out its hinging task between the handle 3 and the pad 1 not through special mechanical couplings but through elastic deformation which can support the elastic element 5 without being minimally damaged; indeed, it is precisely this type of elastic deformability which permits the above-mentioned torsional forces to be correctly and efficiently transmitted without causing the pad 1 to tilt during its rotation with respect to the surface to be cleaned.

The use of the elastic element 5 thus allows the handle 3 to be inclined with respect to the pad 1, as can be seen by comparing figures 2 and 3. Obviously, since the elastic element 5 is flexible without any preferential direction, the axis about which the handle 3 is made to oscillate to incline it with respect to the pad 1 is any transversal axis of the elastic element 5. With reference exclusively to this characteristic, the elastic hinge 4 behaves like a ball-joint.

The substantially torsional rigidity of the elastic element 5 means that for a rotation of the handle 3 about its longitudinal axis in one or the other direction (see arrows T1 and T2 in figure 1), a corresponding rotation of the pad 1 in its lie plane follows, in one direction or an opposite direction (see arrows R1 and R2 of figure 1). Observing figure 1, in which Ra1 and Ra2 indicate the rotation directions, corresponding to R1 and R2, of the pad 1 about an axis perpendicular thereto and coinciding with the axis of the elastic element 5, it can be seen that when the handle 3 is perpendicular to the pad 1 the directions T1 and T2 coincide exactly with directions Ra1 and respectively Ra2. All of the above is easily understood since the torsional force the user impresses on the handle 3 is transmitted therefrom to the elastic hinge 4, which, as the elastic element 5 is substantially rigid from the torsional point of view, transmits it to the pad 1. The pad 1, which is merely resting on the floor to be treated and not constrained thereto, rotates exactly like the handle 3, maintaining the rotation phase and the relative amplitude. Since the elastic element 5 is flexible, the angle the handle 3 forms with the pad 1 can be of any degree. In practice, the handle 3 will be inclined with respect to the pad 1 by an angle comprised between 90 degrees and zero degrees. The latter configuration is obtained by arranging the handle 3 more or less parallel to the pad 1: even in this case the torsional force impressed on the handle 3 is directly transmitted to the pad 1, causing it to rotate correspondingly.

Once the desired configuration between the handle 3 and the pad 1 has been reached, the handle 3 can be acted upon to advance and retreat the pad 1 in the normal way and as indicated by the cleaning-action direction P in figures 1 and 2. The arrows indicated by P in figure 1 indicate only the movement direction of the pad 1 during its normal use and independently of the configuration of the pad 1 itself, and have nothing to do with the other arrows illustrated in the same figure.

The possible forms of realization of the pad 1 according to the present invention are innumerable, but all have in common the fact that what allows the articulation between the handle 3 and the pad 1 is the elastic deformability of an elastic element 5 constituting an elastic hinge 4 interplaced there-between and connecting them.

Figures from 1 to 3 illustrate a first embodiment in which the elastic element 5 is made in elastomer material, preferably in polyeurethane, but could be made also in rubber or like material, such as EVA and other elastomer polymers and copolymers, and is made in a single piece with the pad 1 and the attachment 2. In this case the flexibility of the pad 1 is guaranteed by the fact that it is made in the same flexible material as the elastic element 5. In the same figures the elastic element 5 is cylindrical and is solid. The pad 1 perimetrally exhibits at its connection zone with the elastic hinge 4 an annular relief 6 constituting a stiffening element for the pad 1.

The annular relief 6 at the same time also functions as a flexion limiter for the flexion the elastic hinge 4 can undergo with respect to the pad 1, in the sense that the elastic element 5 is prevented from flexing exactly at its connection zone with the pad 1 such that the handle 3, in its parallel configuration with respect to the pad 1, is kept at a certain minimum distance from said pad 1, as can be seen in figure 2. Physically it is clear that a flexible element 5 made of the above-mentioned material and set in rotation by the handle 1 behaves as a succession of infinite rotations of infinite and infinitesimal sections arranged one following the other, each of which transmits to the next the rotation received from the previous one.

In figures from 4 to 6 the elastic element 5 has a hollow truncoconical shape and is joined to the pad 1 at its larger end. The attachment 2 can be joined to the smaller end of the truncoconical conformation of the elastic element 5, as illustrated in figures from 4 to 6, or can be made directly in the truncoconical conformation starting from the smaller end as illustrated in figure 5. The lateral walls 9 of the truncoconical conformation of the elastic element 5 can be continuous, as illustrated in figures 4 and 5, or can be grooved by a plurality of longitudinal slots 10 defining an equal plurality of plates 11. In figure 7 the elastic element 5 has a tubular conformation and functions at the same time as an attachment 2 for the handle 3.

In figures from 8 to 11 the elastic element 5 is an independent element which is provided with two coaxial end holes 13 into one of which a central shank 12 fits, while a lower end of the handle 3 fits into the other. In figure 8 the elastic element 5 is tubular such as to resemble a sleeve and functions as an attachment 2 for the handle 3. The elastic element 5 also functions as an attachment 2, but is centrally solid.

The elastic element 5 assumes a special conformation, as can be seen in figures 10 and 11, in which the elastic element 5 is constituted by a helix spring 14. In figure 10 the helix spring 14 also functions as an attachment 2, while in figure 11 it is connected to the attachment 2.

Figure 12 illustrates an embodiment in which the the elastic element 5 is made in a single body with the pad 1 and constitutes therefor a shank which is complementarily couplable in a respective end hole 15 made in the attachment 2 or in the handle 3.

Observing figures from 13 to 16 it can be noted that the pad 1 can be provided with weights 16 or, more generically, with stabilizing elements which improve its contact with the floor to be treated without reducing the flexibility of the pad 1. In figure 13 the weights, situated beneath the pad 1, are slightly arced or shaped, such as to constitute skates 17 favouring sliding or insertion of the opposite ends of the pad 1 in the pockets 7 of the cleaning tool head 8. The weights 16 can also be applied on the upper surface of the pad 1, as illustrated in figures 14 and 15. The weights 16 can be arranged on transversal directions of the pad 1 as illustrated in figure 14, or also in oblique or longitudinal directions on the pad 1 itself, as illustrated in figure 15. Figures from 13 to 15 take into consideration the fact that the pad 1 can be made in a single body with the elastic element 5.

In figure 16 an embodiment is illustrated in which the pad 1 is composed of a sole 18 of flimsy material inferiorly applied at a central zone thereof to a small board 19 provided on the side not interacting with the sole 18 with a shank 12. In this embodiment the weights 16 are especially necessary to act as stabilizers; while the elastic element 5 is independent as, described with reference to figures from 8 to 11 in which reference was also made to the small board 19.

In a preferred embodiment illustrated in figures 18 and 19, the pad 1 is provided with an internal rigid insert 20. In other words the pad 1 is realized in a single body with the elastic element 5 and exhibits internally of its sole 18 a board 20' made of rigid material, completely sunk in the material of the pad 1 itself. The board 20' has slightly smaller longitudinal dimensions than those of the pad 1, indicated in figures 18 and 19 by L, such that the ends 21 of the pad 1 are not in contact with the board 20' and remain flexible, free to flex according to the directions indicated by arrows F1. By providing the pad 1 with such ends 21 said pad 1 is easily insertable into the pockets 7 of a textile cleaning tool head 8, as illustrated in particular in figure 19. In this embodiment the stabilizing element or weight able to improve contact with the surface to be cleaned or treated by the pad 1 is none other than the rigid insert 20.

In figures 18 and 19 the elastic element 5 is made in a single body both with the pad 1 and the attachment 2 for the handle 3. In particular, the upper part of the elastic element 5 constituting the attachment 2 has internally thereof a coaxial core 22 made of rigid material and provided with a thread suitable for receiving and coupling with the end of the handle 3.

Figures 20 and 21 illustrate an alternative embodiment of the pad 1 wherein better distribution of torsional and rotation thrust on to the pad 1 and thus on to the cleaning tool head 8 are achieved. These torsional and axial forces are generated by rotation and axial thrust imparted on the handle 3 during the use of the implement.

In this embodiment the attachment 2 is provide with a usually blind hole 27 into which an end of the handle 3 is inserted and fixed, and the elastic hinge 4 exhibits a funnel- or cup-shaped conformation, hollow at 29, and joined to the pad 1 at its larger end. The tubular element 2 is prolonged internally of the cavity 29 up to near the lie plane of the pad 1, as illustrated in figure 20, such as to provide an element for limiting and controlling the elastic deformation of the elastic hinge 4 when it contacts the cleaning head 8 already in contact with the surface to be cleaned 28.

The elastic hinge 4 exhibits a bellows-structure thanks to the presence of a plurality of cylindrical elements 6 arranged in a pile, with progressively decreasing diameter starting from the pad 1 and moving towards the tubular element 2. The cylindrical elements 23 are linked two-by-two by means of annular elements 24 constituting a like number of elastic elements. With this conformation the torsional forces which rotate the handle 3 about its own axis are optimally distributed on the pad 1 and thus also on the cleaning head 8. Both the annular elements 24 and the cylindrical elements 23 constitute single structures and together make up the total structure of the elastic hinge 4, able gradually and efficiently to distribute torsional forces.

Looking now at figure 21, it can be seen that when the handle 3 is inclined with respect to the pad 1, a tract 26 of the link line of one of the annular elements 24 with the respective upper cylindrical element 23 acts as a fulcrum for rotation of the handle 3 with respect to the pad 1. This tract 26 acting as a fulcrum undergoes a slight flexion and is situated, with respect to the vertical axis of the handle 3, on the opposite side to the side the handle 3 is inclined towards. The whole portion of the elastic hinge 4 positioned below the handle 3 is subjected to considerable deformation as a result of the rotation thrust exerted on the handle 3, illustrated in figure 21. The portion of the tubular element 2, which reaches into the cavity 29 and which is denoted by 25, nears the lie plane of the pad 1 following a rotation of the tubular element 2 and the handle 3. Indeed the fulcrum 26 is not on the axis of the handle 3 but is a little removed therefrom so that the lower end of the prolungation 25 lowers considerably and the portion of the elastic hinge 4 which is diametrically opposite the fulcrum 26 undergoes a greater deformation, as shown in figure 21.

The length of the prolungation 25 is chosen so that when the handle 3 is rotated with respect to the pad 1 the lower end of the prolungation 25 comes into contact with the cleaning head 8, which last is already against the surface to be cleaned 28. The prolungation 25 must have a certain degree of axial resistance so that the handle 3 does not advance axially further with respect to the pad 1 to limit the elastic deformation of the elastic hinge 4. To achieve this degree of resistance the prolungation 25 might be solid or, since the material it is made of is elastic, the blind hole 27 in the tubular element 2 for housing the handle 3 end can also be made in the prolungation 25 such that the handle 3 is resistant to axial strains. When the handle 3 is rotated and thrust forwards, the lower free end of the prolungation 25 of the attachment 2 advances and contacts with the underlying cleaning head 8. At this point, when an axial thrust is exerted on the handle 3 in either direction, the thrust bears in part directly on the cleaning head 8 through the prolungation 25 and in part on the elastic hinge 4.

The thrust transmitted to the elastic hinge 4 is thereupon distributed to the pad 1 through the cylindrical elements 23 which function as struts and through the annular elements 24 which act as springs.

Still with reference to figure 21, it can be seen that at the moment of the handle 3 rotation the portion of elastic hinge 4 which is deformed is really elastically loaded like a spring, and transmits a thrust distributed on the underlying portion of the pad 1 without exerting any axial thrust on the handle 3 to set the pad 1 in movement. This means that when the handle 3 receives an axial thrust towards the pad 1, the axial thrust is transmitted to and distributed on the pad 1 through the undeformed portion of the elastic hinge 4. The elastic hinge 4 transmits to and distributes on the pad 1 only axial thrust over the whole mass of its larger base of contact with the pad 1. The pad 1 is thus subjected only to thrusts squeezing it on to the surface to be cleaned and likewise thrusts which prevent it from rotating and lifting from said surface. Further, subsequently to the rotation of the handle 3 with respect to the pad 1, there is no relative movement between attachment 2 and pad 1 since the prolungation 25 is already in contact with the cleaning head 8 and the surface to be cleaned and any axial thrust exerted on the handle 3 is directly and rigidly transmitted to the cleaning head 8 and on the surface to be cleaned and therefore can only cause the handle 3 to slide taking with it the pad 1.

The prolungation 25 transmits the axial thrust applied on the handle 3 to the cleaning head 8, so that the the cavity 29 of the elastic hinge 4 also comes into contact with the surface to be cleaned, together with the cleaning head 8.

Among the advantages which can be mentioned the most evident is the extreme constructional simplicity of the elastic element 5 and the pad 1 in all embodiments described and illustrated herein. The pad 1, in the examples where it is realized in a single body with the elastic element 5, made in elastomer material, preferably polyeurethane, but also rubber or like material, such as EVA and other elastomer polymers or copolymers, allows the tool to reach small and narrow corners without damaging furniture standing nearby.

## Claims

1. A pad for realizing tools such as floor sponges, brushes, dusters and the like, for cleaning and treating surfaces in general, of a type provided with an attachment (2) for a respective handle (3), characterized in that a connection of said pad (1) to said handle (3) is constituted by an elastic hinge (4) coaxial to said handle (3), interpositioned between said attachment (2) and said pad (1) and constituting a torsional and axial constraint between said pad (1) and said handle (3), leaving said handle (3) free to reach any inclined position with respect to said pad (1) while leaving said constraint unaltered and thus being able to to transmit to said pad (1) a rotation on a lie plane thereof following a rotation of the handle (3) about a longitudinal axis thereof at any inclination imposed on the handle (3) with respect to the pad (1).

2. A pad as in claim 1, characterized in that it is made of a flexible or flimsy material and characterized in that said elastic hinge (4) is constituted by an elastic element (5) susceptible to flexion while rigid to torsion and axial forces; said elastic element functioning as a joint element or fulcrum or sphere following an elastic deformation thereof.

3. A pad as in claim 1, characterized in that said elastic hinge (4) is constituted by an elastic element (5) which is flexible while rigid to torsion and axial forces and which is realized in a single body with said pad (1) and said attachment (2), said pad (1) being flexible, as is said elastic element (5), such that a longitudinal mass of said pad (1) can be reduced in order to allow insertion of ends thereof into respective facing pockets (7) set on a cleaning tool head (8), associable to the pad (1), for cleaning or treating surfaces.

4. A pad as in claim 3, characterized in that said elastic element (5) has a substantially solid cylindrical shape and said pad (1) exhibits, perimetrally of a joining zone thereof to said elastic hinge (4), an annular relief (6) for stiffening said pad (1).

5. A pad as in claim 4, characterized in that said annular relief (6) constitutes a flexion limiter of said elastic hinge (4) with respect to said pad (1).

6. A pad as in claim 3, characterized in that said elastic element (5) has a truncoconical shape and is internally hollow, and is joined to said pad (1) at a larger end of said elastic element (5).

7. A pad as in claim 6, characterized in that said attachment (2) is joined to said elastic element (5) or made therein at a smaller end thereof.

8. A pad as in claim 6, characterized in that said elastic element (5) exhibits lateral walls (9) which are of a continuous truncoconical shape.

9. A pad as in claim 6, characterized in that said elastic element (5) exhibits lateral walls (9) which are of a discontinuous truncoconical shape, being grooved by a plurality of longitudinal slots (10) fashioning a corresponding plurality of plates (11) from said lateral walls.

10. A pad as in claim 3, characterized in that said elastic hinge (4) is internally hollow and made in a single body with said pad (1) and said attachment (2), to which it is coaxial, and exhibits a funnel- or cup-shaped conformation united to said pad (1) at a larger base of said elastic hinge (4); said atachment (2) extending internally of said elastic hinge (4), to give rise to a prolungation which functions as a controlling and limiting element (25) of an elastic deformation of said elastic hinge (4) when contact is made thereof with said cleaning tool head (8) resting against a surface (28) to be treated.

11. A pad as in claim 10, characterized in that said elastic hinge (4) exhibits a bellows structure comprising a plurality of cylindrical elements (23) set in a pile sequence and having progressively decreasing diameters in a distancing direction from said pad (1); said cylindrical elements (23) being reciprocally united by means of elastic annular elements (24).

12. A pad as in claim 10, characterized in that the prolungation (25) of said tubular element (2) inside of said elastic hinge (4) is a solid elastic element which is resistant to axial thrusts.

13. A pad as in claim 12, characterized in that said prolungation (25) of said tubular element (2) is internally hollow and communicates directly with a blind hole (27) made therein, which blind hole (27) provides a housing for an end of said handle (3), which end constitutes a body of resistance for said prolungation (25) to axial thrust.

14. A pad as in claim 3, characterized in that said elastic element (5) is substantially tubular and functions also as an attachment (2) for said handle (3).

15. A pad as in claim 1, characterized in that said elastic hinge (4) is constituted by an elastic element (5) which is flexible while substantially rigid during torsion and to axial forces and which is joined on one side thereof to an end of said attachment (2) and on another side thereof to a central shank (12) on the pad (1), said pad (1) being made of flexible material such that it can be longitudinally reduced in length such that ends thereof can be inserted into said pockets (7) situated at opposite ends of a cleaning tool head (8) which is associable to said pad (1).

16. A pad as in claim 1, characterized in that said elastic hinge (4) is constituted by an elastic element (5) which is flexible but substantially rigid to torsion forces and axial forces and which is realized in a single body with said pad (1) and said attachment (2), a rigid insert (20) being sunk wholly into said pad (1).

17. A pad as in claim 16, characterized in that said rigid insert (20) is constituted by a board (20') which is completely sunk into a material constituting the pad (1), said board (20') exhibiting a longitudinal dimension (l) which is smaller than a longitudinal dimension (L) of the pad (1).

18. A pad as in claim 16, characterized in that said elastic element (5) is made in a single body both with the pad (1) and with the attachment (2) for the handle (3), and a superior part thereof constituting the attachment (2) internally exhibits a coaxial core (22) made of a rigid material and is provided with means for coupling thereof with a corresponding end of the handle (3).

19. A pad as in claim 15, characterized in that said elastic element (5) is substantially cylindrical and is provided with two coaxial end holes (13) in one whereof said shank (12) of the pad (1) and in another whereof an end of said handle (3) are engaged; said elastic element being able to function as an attachment (2) for said handle (3).

20. A pad as in claim 15, characterized in that said elastic element (5) is substantially tubular and cylindrical and can function as an attachment (2) for said handle (3).

21. A pad as in claim 15, characterized in that said elastic element (5) is constituted by a helix spring (14).

22. A pad as in claim 15, characterized in that said elastic element (5) is constituted by a helix spring (14), which helix spring (14) functions as an attachment (2) for said handle (3).

23. A pad as in claim 1, characterized in that said elastic hinge (4) is constituted by an elastic element (5) which is flexible but substantially rigid during torsion and under effect of axial forces, and which is made in a single body with said pad (1), which pad (1) is flexible such that a longitudinal mass thereof can be reduced to allow for insertion of ends thereof into pockets (7) set in opposite and facing positions on a cleaning tool head (8) associable to said pad (1) for cleaning or treating surfaces, said elastic element (5) constituting a shank for said pad (1) and being complementarily housed in a respective end hole (15) afforded in said attachment (2) or said handle (3).

24. A pad as in claim 2, characterized in that it is provided with weights (16) for increasing an adherence thereof to a surface to be cleaned or treated, which weights do not significantly reduce flexibility of said pad (1).

25. A pad as in claim 24, characterized in that said weights (16) are fixed inferiorly on and at least on opposite ends of said pad (1) and function as skates (17) for inserting said ends in respective pockets (7) made in a cleaning tool head (8) destined to be applied to said pad (1).

26. A pad as in claim 24, characterized in that said weights (16) are fixed superiorly on said pad (1) and according to transversal and/or longitudinal directions thereof.

27. A pad as in claim 2, characterized in that it is constituted by a flimsy sole (18) and a small board (19) connected to said elastic hinge (4) and applied in a central zone of said sole (18), to which are applied, bilaterally of said small board (19), weights (16) for increasing adherence of said pad (1) to a surface to be treated without significantly reducing flexibility thereof.

28. A pad as in claim 3, characterized in that it is made of elastomer material, preferably polyeurethane, or of rubber or EVA or other elastomer polymers or copolymers.
